# EUROPÄISCHE PATENTANMELDUNG

(11) **EP 0 585 948 A1**
(43) Veröffentlichungstag der Anmeldung: **09.03.1994**
(21) Anmeldenummer: 93114169.1
(22) Anmeldetag: 03.09.1993
(51) Int. Cl.: H02M 3/158

(54) **Schaltungsanordnung zur Umsetzung der Wechselspannung eines Versorgungsnetzes in eine Ausgleichsspannung mit einer im wesentlichen sinusförmigen, netzfrequenten Stromaufnahme**

(30) Priorität: 04.09.1992 DE 4229513
(71) Anmelder: SIEMENS AKTIENGESELLSCHAFT, D-80333 München (DE)
(72) Erfinder: Herfurth, Michael, Dipl.-Ing., D-82205 Gilching (DE)

(57) **Zusammenfassung**

Schaltungsanordnung zur Umsetzung der Wechselspannung eines Versorgungsnetzes in eine Ausgangsgleichspannung mit einer im wesentlichen sinusförmigen, netzfrequenten Stromaufnahme mit einem Hoch-Tiefsetzsteller, der bei Ausgangsgleichspannungen kleiner der Wechselspannung als Hoch-Tiefsetzsteller und bei Ausgangsgleichspannungen größer der Wechselspannung als Hochsetzsteller betrieben wird.

## Beschreibung

Schaltungsanordnung zur Umsetzung der Wechselspannung eines Versorgungsnetzes in eine Ausgangsgleichsspannung mit einer im wesentlichen sinusförmigen, netzfrequenten Stromaufnahme

Die Erfindung bezieht sich auf eine Schaltungsanordnung zur Umsetzung der Wechselspannung eines Versorgungsnetzes in eine Ausgangsgleichspannung mit einer im wesentlichen sinusförmigen, netzfrequenten Stromaufnahme nach dem Oberbegriff des Patentanspruchs 1.

Durch Gleichrichtung mit anschließender Kondensatorglättung entstehen bei getakteten Geräten in Wechselspannungsnetzen Oberschwingungen, die durch die pulsförmigen Kondensatorladeströme verursacht werden. Diese Oberschwingungen können zum einen weitere Verbraucher stören und zum anderen einen stark verzerrten Netzstrom erzeugen, der zu einer hohen Verzerrungsblindleistung und damit zu hohen Netzanschlußwerten führt. Durch die vermehrte Verwendung von Schaltnetzteilen zur Gleichspannungserzeugung auf einem breiten Anwendungsgebiet, beispielsweise bei Haushaltsgeräten und bei Vorschaltgeräten für Leuchtstofflampen, ist ein Geringhalten der Störbeeinflussung unabdingbar. Es wird daher eine möglichst sinusförmige Stromaufnahme angestrebt.

Eine gebräuchliche Schaltungsanordnung zur Umsetzung der Wechselspannung eines Versorgungsnetzes in eine Ausgangsgleichspannung mit einer im wesentlichen sinusförmigen, netzfrequenten Stromaufnahme besteht beispielsweise aus einem als Tiefpaß wirkenden Eingangsfilter, dem ein ungesteuerter Gleichrichter in Brückenschaltung, ein Gleichstrom-Hochsetzsteller und ein Stützkondensator folgen. Der Gleichstrom-Hochsetzsteller umfaßt einen Quertransistor, daran anschließend eine Freilaufdiode, welche die Verbindung zwischen Quertransistor und Stützkondensator bildet, und eine Speicherdrossel als Induktivität zwischen Eingangsfilter und Quertransistor. Die Sinusform des dem Eingangsfilter zufließenden Wechselstroms sowie dessen Amplitude und Effektivwert werden über die Vorgabe von Ein- und Ausschaltdauer des Quertransistors bewirkt. Dazu wird in einer der möglichen Steuerungsvarianten der Quertransistor frühestens dann eingeschaltet, wenn durch die Speicherdrossel kein nennenswerter Strom mehr fließt. Folglich ergibt sich für den Strom in der Speicherdrossel ein dreiecksförmiger Verlauf. Die Schaltfrequenz des Stellerschalters ist dabei groß gegenüber der Frequenz des speisenden Wechselstromes. Bezeichnend ist darüber hinaus, daß die Ausgangsgleichspannung höher ist als der Scheitelwert der speisenden Wechselspannung.

Um auch Ausgangsgleichspannungen erzeugen zu können, die kleiner sind als die Scheitelspannung der speisenden Wechselspannung werden üblicherweise Hoch-Tiefsetzsteller verwendet. Gegenüber dem Hochsetzsteller ist zusätzlich ein Längstransistor vorgesehen, der zwischen das Eingangsfilter und die Speicherdrossel geschaltet ist und synchron zum Quertransistor angesteuert wird. Außerdem ist eine weitere Freilaufdiode über den Längstransistor dem Tiefpaßfilter parallel geschaltet. Gegenüber dem Hochsetzsteller hat der Hoch-Tiefsetzsteller den Nachteil eines schlechteren Wirkungsgrades. Derartige Hochsetzsteller und Hoch-Tiefsetzsteller sind beispielsweise aus M. Herfurth, TDA 4814 -Integrierte Steuerschaltung für sinusförmige Netzstromaufnahme, Siemens Components 24 (1986), Heft 3, Seiten 103-107- bekannt.

Aufgabe der Erfindung ist es eine Schaltungsanordnung zur Umsetzung der Wechselspannung eines Versorgungsnetzes in eine Ausgangsgleichspannung mit einer im wesentlichen sinusförmigen, netzfrequenten Stromaufnahme und mit einer Ausgangsgleichspannung, die sowohl größer als auch kleiner als der Scheitelwert der speisenden Wechselspannung sein kann, anzugeben, die einen höheren Wirkungsgrad aufweist.

Die Aufgabe wird bei einer gattungsgemäßen Schaltungsanordnung durch die kennzeichnenden Merkmale des Patentanspruchs 1 gelöst. Ausgestaltungen und Weiterbildungen der Erfindung sind Gegenstand von Unteransprüchen.

Die Erfindung wird nachfolgend anhand des in der einzigen Figur der Zeichnung dargestellten Ausführungsbeispiels näher erläutert.

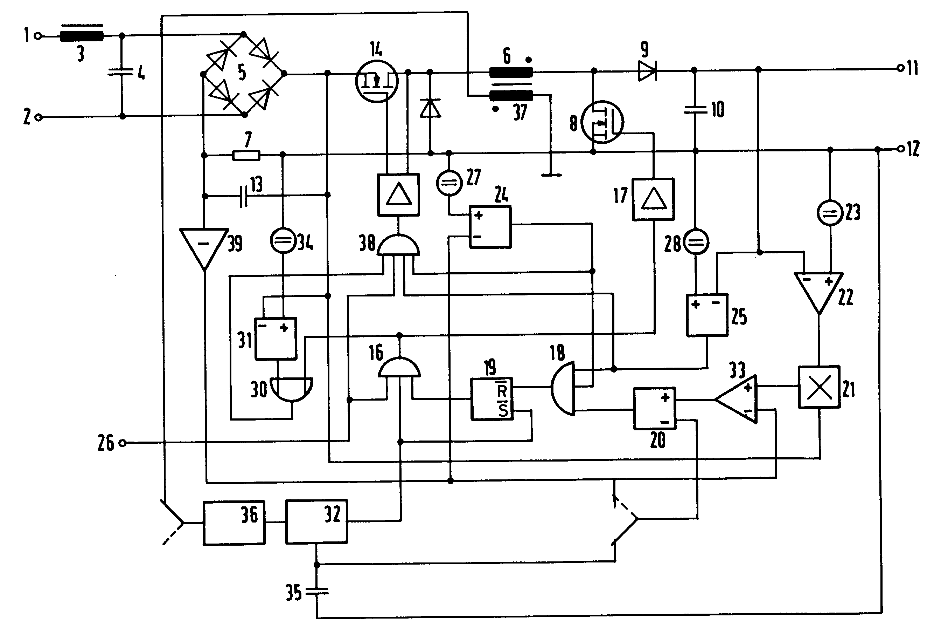

Die in Figur 1 gezeigte Ausführungsform einer erfindungsgemäßen Schaltungsanordnung umfaßt ein aus einer Längsinduktivität 3 und einem Querkondensator 4 bestehendes Eingangsfilter. Die Längsinduktivität 3 liegt zwischen einem ersten Anschluß 1 eines Versorgungsnetzes und einem Anschluß des Querkondensators 4, dessen anderer Anschluß mit dem zweiten Anschluß 4 des Versorgungsnetzes verbunden ist. Dem Querkondensator 4 ist darüber hinaus ein Brückengleichrichter 5 eingangsseitig parallelgeschaltet, dessen ausgangsseitige Anschlüsse über einen Kondensator 13 miteinander verbunden sind. Ein Anschluß des Kondensators 13 ist mit dem Drainanschluß eines MOS-Feldeffekttransistors 14 vom n-Kanaltyp verschaltet, dessen Sourceanschluß über eine Diode 15 und einen dazu in Reihe liegenden Widerstand 7 gekoppelt ist. Die Diode 15 bildet eine Freilaufdiode und ist daher kathodenseitig mit dem Sourceanschluß des Transistors 14 und anodenseitig mit dem Widerstand 7 verbunden. Der Anodenanschluß der Diode 15 führt ein Bezugspotential das über eine Ausgangsklemme 12 direkt abgenommen wird. Der Kathodenanschluß der Diode 15 ist über eine Speicherdrossel 6 auf den Drainanschluß eines MOS-Feldeffekttransistors 8 vom n-Kanaltyp und auf den Anodenanschluß einer Diode 9 geführt, deren Katodenanschluß mit einer Ausgangsklemme 11 verbunden ist. Zwischen die Ausgangsklemmen 11 und 12 ist ein Glättungskondensator 10 geschaltet. Schließlich ist auch der Sourceanschluß des Transistors 8 mit der Ausgangsklemme 12 verbunden.

Zur Ansteuerung der MOS-Feldeffekttransistoren 8 und 14 ist deren jeweiligem Gateanschluß ein Treiberverstärker 17 bzw. 29 vorgeschaltet. Der Eingang des Treiberverstärkers 17 ist ebenso wie ein Eingang eines ODER-Gatters 30, dessen anderer Eingang mit dem Ausgang eines Komparators 31 verschaltet ist, an den Ausgang eines UND-Gatters 16 angeschlossen. Zur Ansteuerung des Treiberverstärkers 29, der eine Potentialtrennung aufweist, ist der Ausgang des UND-Gatters 38 mit dessen Eingang verbunden. Von den vier Eingängen des UND-Gatters 38 ist der erste mit dem Ausgang des ODER-Gatters 30, der zweite mit dem Ausgang des Komparators 25 und der dritte mit dem Ausgang des Komparators 24 verbunden. Der vierte Eingang wird von einem externen Signal 26 angesteuert. Das UND-Gatter 16 weist drei Eingänge auf, von denen der erste durch ein externes Signal 26 angesteuert wird, der zweite an den Ausgang eines steuerbaren Oszillators 32 angeschlossen ist und der dritte Eingang mit dem Ausgang eines RS-Flip-Flops 19 gekoppelt ist. Der invertierende Setzeingang S ist dabei mit dem zweiten Eingang des UND-Gatters 16 verbunden. Dem invertierenden Rücksetzeingang R des RS-Flip-Flops 19 ist ein UND-Gatter 18 vorgeschaltet, dessen drei Eingänge mit jeweils einem Ausgang eines Komparators 20 bzw. 24 bzw. 25 verbunden sind. Der nichtinvertierende Eingang des Komparators 20 ist an den Ausgang eines Regelverstärkers 33 angeschlossen, dessen nichtinvertierender Eingang seinerseits mit dem Ausgang eines Multiplizierers 21 verbunden ist. Ein Eingang des Multiplizierers 21 ist dabei wie auch der invertierende Eingang des Komparators 31 an den anderen Anschluß des Kondensators 13 angeschlossen. Der andere Eingang des Multiplizierers 21 ist mit dem Ausgang eines Regelverstärkers 22 gekoppelt, dessen invertierender Eingang, wie auch der invertierende Eingang des Komparators 25, mit der Ausgangsklemme 11 verbunden ist. Die nichtinvertierenden Eingänge der Komparatoren 24, 25, 31 und des Regelverstärkers 22 sind über jeweils eine Referenzspannungsquelle 23 bzw. 27 bzw. 28 bzw. 34 mit der Ausgangsklemme 12 gekoppelt. Der invertierende Eingang des Komparators 24 und des Regelverstärkers 33 sind mit dem Ausgang des invertierenden Operationsverstärkers 39 verbunden, dessen Eingang schließlich mit dem einen Anschluß des Kondensators 13 verbunden ist.

Der gesteuerte Oszillator 32 umfaßt einen frequenzbestimmenden Kondensator 35, wobei die an ihm abfallende Spannung wahlweise an den invertierenden Eingang des Komparators 20 gelegt werden kann. Andernfalls ist der invertierende Eingang des Komparators 20 mit dem Ausgang des invertierenden Operationsverstärkers 39 zu verbinden. Eine Auswerteschaltung 36 ermittelt über eine mit der Speicherdrossel 6 induktiv gekoppelten Meßspule 37 die Stromzunahme bzw. Stromabnahme in der Speicherdrossel 6 und erzeugt davon abhängig Ansteuersignale für den Oszillator 32.
Der Multiplizierer 21 liefert eine aus dem Scheitelwert der speisenden Wechselspannung und der Spannung am Ausgang des Regelverstärkers 22 hervorgehende Spannung, welche als Sollwert zur Einstellung des durch den Widerstand 7 fließenden Stromes dient. Der Regelverstärker 22 liefert dabei eine Spannung, die proportional ist zu der Differenz der Spannung der Referenzspannungsquelle 23 und der zwischen den Klemmen 11 und 12 anliegenden Ausgangsgleichspannung. Ebenso bildet der Regelverstärker 33 eine der Differenz der am Ausgang des Multiplizierers 21 anliegenden Spannung und der über dem Widerstand 7 abfallenden, der Stromaufnahme proportionalen Spannung, die durch den Komparator 20 je nach Betriebsweise entweder mit der an den Widerstand 7 abfallenden und durch den Operationsverstärker 39 invertierten Spannung oder mit der Spannung über dem Kondensator 35 verglichen wird. Beim Überschreiten des durch die Spannung am Ausgang des Regelverstärkers 33 vorgegebenen Sollwertes nimmt der Ausgang des Komparators 20 einen dem logischen Zustand Null entsprechenden Wert an. Ist der zur Überspannungsüberwachung vorgesehene Komparator 24 und der zur Überstromüberwachung vorgesehene Komparator 25 nicht aktiviert, so führen sie an ihren Ausgängen einen den logischen Zustand Eins entsprechenden Wert. Die Komparatoren 20, 24, 25 können eine Hysterese aufweisen, der Komparator 31 hat jedoch bevorzugt ein Hystereseverhalten, um Schwingneigungen in der Nähe des jeweiligen Grenzwertes zu unterbinden. Für den Ausgang des UND-Gatters 18 ergibt sich somit ein logischer Zustand Null. Dadurch wird das RS-Flip-Flop 19 über seinen negierten Rücksetzeingang R rückgesetzt, was einem logischen Zustand Null an seinem Ausgang entspricht. Bei gleichzeitiger Ansteuerung beider Eingänge des RS-Flip-Flops 19 dominiert der invertierende Rücksetzeingang R. Dadurch weisen aber auch die Ausgänge des UND-Gatters 16 und des Treiberverstärkers 17 den logischen Zustand Null auf. Damit wird der MOS-Feldeffekttransistor 8 und gegebenenfalls auch der MOS-Feldeffekttransistor 14 gesperrt. Ob der MOS-Transistor 14 gesperrt wird, hängt bei nicht aktivierten Komparatoren 24 und 25 von dem Ausgangssignal des Komparators 31 ab, das mit dem Ausgangssignal des UND-Gatters 16 über das ODER-Gatter 30 verknüpft wird. Liegt nämlich der Scheitelwert der speisenden Wechselspannung unter dem von der Referenzspannungsquelle 34 vorgegebenen Wert, so tritt am Ausgang des Komparators 31 ein der logischen Eins entsprechender Wert auf, wodurch der MOS-Feldeffekttransistor 14 so lange durchgeschaltet bleibt, bis der Scheitelwert die Spannung der Referenzspannungsquelle 34 wieder übersteigt. Bei einem Scheitelwert der versorgenden Wechselspannung kleiner dem gegebenen Grenzwert wird die gesamte Anordnung demnach als Hochsetzsteller mit einem günstigen Wirkungsgrad betrieben, während sie bei darüberliegenden Scheitelwerten als Hoch-Tiefsetzsteller mit einem ungünstigeren Wirkungsgrad darstellt, jedoch dabei die Erzeugung von Ausgangsgleichspannungen kleiner als der Scheitelwert der versorgenden Wechselspannung ermöglicht. Durch das UND-Gatter 38 können der Überspannungskomparator 25 und der Überstromkomparator 24 den MOSFET 14 dominant zum Komparator 31 sperren.
Außerdem sind zwei Betriebsweisen zu unterscheiden, nämlich eine erste Betriebsweise mit konstanter Frequenz und eine zweite Betriebsweise, bei der die Frequenz von dem durch die Speicherdrossel 6 fließenden Strom abhängt. Im ersten Fall gibt der Oszillator 32 in konstanten Zeitabständen kurze, dem logischen Zustand Null entsprechende Triggerimpulse ab, wodurch das RS-Flip-Flop 19 gesetzt wird. Die Eingänge des UND-Gatters 16 führen nun unter der Annahme, daß auch das Steuersignal 26 den logischen Zustand Eins aufweist, jeweils den logischen Zustand Eins. Demzufolge wird über den Treiberverstärker 17 der MOS-Feldeffekttransistor 8 sowie gegebenenfalls über den Treiberverstärker 29 in Verbindung mit dem ODER-Gatter 30 der MOS-Feldeffekttransistor 14 durchgeschaltet. Der Strom durch die Spule und im gleichen Maße die gesamte Stromaufnahme steigen an, bis der durch die Spannung am Ausgang des Regelverstärkers 33 vorgegebene Sollwert wieder überschritten und damit das RS-Flip-Flop 19 durch den Komparator 20 rückgesetzt wird. Während des Setzvorganges des RS-Flip-Flops 19 auftretende Störzustände werden vorteilhafterweise durch das erste UND-Gatter 16 ausgeschlossen, da der Setzimpuls über das UND-Gatter 16 den Treiberverstärker 17 blockiert. Mit dem Steuersignal 26 kann zudem die gesamte Schaltungsanordnung aktiviert bzw. deaktiviert werden.

Bei der ersten Betriebsweise kann der Transistor erneut einschalten, bevor der Strom durch die Diode 9 Null geworden ist. Dadurch treten näherungsweise trapezförmige Ströme auf. Als problematisch könnten sich hier bei hohen Betriebsfrequenzen Diodenrückströme erweisen, die durch die Verzögerung der Sperrfähigkeit der Dioden 9 und 15 entstehen. Günstiger ist daher die zweite Betriebsweise, die vor dem erneuten Einschalten des MOS-Feldeffekttransistors 8 bzw. der MOS-Feldeffekttransistoren 8 und 14 den Strom durch die Diode 9 und 15 Null werden läßt. Ein zunehmender Strom durch die Speicherdrossel 6 entsteht bei eingeschaltetem MOSFET 8 und induziert eine negative Spannung in der Meßspule 37. Bei gesperrtem MOSFET 8 fließt der nun abnehmende Drosselstrom über die Freilaufdiode 9, wobei in der Meßspule 37 eine positive Spannung induziert wird. Wenn der Strom durch die Freilaufdiode 9 Null wird, wechselt die Spannung in der Meßspule die Polarität. Die Auswerteschaltung 36 steuert dabei den Oszillator 32 so, daß erst ein Triggerimpuls erzeugt wird wenn der der Diodenstrom zu Null geworden ist. Dabei entstehen dreieckförmige Ströme, die nur geringe Diodenrückströme nach sich ziehen. Eine freischwingende Betriebsweise, bei der die Eigendynamik des Systems ausgenützt wird, vermeidet im Gegensatz zu einem festfrequenten Betrieb mit dreieckförmigen Strömen Tastlücken und die damit verbundenen Ausschwingvorgänge, was schließlich zu einer geringeren Strombelastung der Bauelemente fuhrt.

## Patentansprüche

1. Schaltunganordnung zur Umsetzung der Wechselspannung eines Versorgungsnetzes in eine Ausgangsgleichspannung mit einer im wesentlichen sinusförmigen, netzfrequenten Stromaufnahme, bei der
- ein Brückengleichrichter (5) mit nachfolgendem Stützkondensator (13) unter Zwischenschaltung eines Tiefpasses (3, 4) an das Versorgungsnetz (1, 2) angeschlossen ist,
- eine erste Freilaufdiode (15) über die Laststrecke eines Längstransistors (14) dem Stützkondensator (13) parallel schaltbar ist,
- die Laststrecke eines Quertransistors (8) über eine Induktivität (6) der ersten Freilaufdiode (15) parallel geschaltet ist,
- ein die Ausgangsgleichspannung führender Glättungskondensator (10) über eine zweite Freilaufdiode (9) der Laststrecke des Quertransistors (8) parallelgeschaltet und
- eine Steuereinrichtung (16 bis 39) Längs- und Quertransistor (14, 8) mit einer gegenüber der Frequenz der Wechselspannung hohen Taktfrequenz und mit einem von der Eingangswechselspannung, der Ausgangsgleichspannung und der Stromaufnahme abhängigen Tastverhältnis schaltet,
**gekennzeichnet durch**
eine gegenüber dem Quertransistor längere Einschaltdauer des Längstransistors in bestimmten Bereichen der Wechselspannung des Versorgungsnetzes, der Ausgangsgleichspannung und/oder der Stromaufnahme.

2. Schaltungsanordnung nach Anspruch 1,
**dadurch gekennzeichnet,**
daß bei einer Wechselspannung kleiner einem gegebenen zugehörigen Grenzwert der Längstransistor (14) permanent eingeschaltet ist.

3. Schaltungsanordnung nach Anspruch 1 oder 2,
**dadurch gekennzeichnet,**
daß bei einer Stromaufnahme und/oder bei einer Wechselspannung über jeweils einem zugehörigen Grenzwert Längs- und Quertransistor (14, 8) abgeschaltet werden.

4. Schaltungsanordnung nach einem der Ansprüche 1 bis 3,
**dadurch gekennzeichnet,**
daß die Taktfrequenz von dem durch die zweite Freilaufdiode (9) fließenden Strom abhängt.

5. Schaltungsanordnung nach einem der Ansprüche 1 bis 4,
**dadurch gekennzeichnet,**
daß die Steuereinrichtung (16 bis 39) bei mindestens einem der Grenzwerte ein Hystereseverhalten aufweist.
